(19) Europäisches Patentamt
European Patent Office
Office européen des brevets

(11) **EP 1 309 939 B1**

## (12) EUROPÄISCHE PATENTSCHRIFT

(45) Veröffentlichungstag und Bekanntmachung des Hinweises auf die Patenterteilung:
**06.10.2004 Patentblatt 2004/41**

(21) Anmeldenummer: **01962572.2**

(22) Anmeldetag: **19.07.2001**

(51) Int Cl.7: **G06K 9/00**

(86) Internationale Anmeldenummer:
**PCT/DE2001/002712**

(87) Internationale Veröffentlichungsnummer:
**WO 2002/013125 (14.02.2002 Gazette 2002/07)**

(54) **VERFAHREN ZUR FINGERABDRUCKAUSWERTUNG UND VORRICHTUNG**

METHOD FOR FINGERPRINT ANALYSIS AND DEVICE

PROCEDE D'INTERPRETATION D'EMPREINTES DIGITALES ET DISPOSITIF

(84) Benannte Vertragsstaaten:
**DE FR GB IT SE**

(30) Priorität: **05.08.2000 DE 10038342**

(43) Veröffentlichungstag der Anmeldung:
**14.05.2003 Patentblatt 2003/20**

(73) Patentinhaber: **ROBERT BOSCH GMBH**
**70442 Stuttgart (DE)**

(72) Erfinder:
• **LICHTERMANN, Jan**
**71665 Vaihingen-Ensingen (DE)**

• **KROENINGER, Mario**
**77815 Buehl (DE)**

(56) Entgegenhaltungen:
WO-A-98/46114          US-A- 5 799 098
US-A- 5 963 656

• **COETZEE L ET AL: "FINGERPRINT RECOGNITION IN LOW QUALITY IMAGES" PATTERN RECOGNITION, PERGAMON PRESS INC. ELMSFORD, N.Y, US, Bd. 26, Nr. 10, 1. Oktober 1993 (1993-10-01), Seiten 1441-1460, XP000403506 ISSN: 0031-3203**

**Beschreibung**

Stand der Technik

Die Erfindung geht aus von einem Verfahren zur Fingerabdruckauswertung nach der Gattung des Hauptanspruchs. Es ist schon ein Fingerabdruckidentifizierungssystem aus der US 5,926,555 bekannt, bei dem das Bild eines Fingerabdrucks. in einzelne Bereiche zerlegt wird und eine Bestimmung, ob einzelne Bereiche für eine Analyse des Fingerabdrucks geeignet sind, über eine Bestimmung einer Frequenz und des Abstandes der Linien des Fingerabdrucks erfolgt. Hierzu werden einzelne Bildausschnitte untersucht und die Daten der Bildausschnitte gefiltert. Anhand der Filterausgabe wird eine Qualitätskarte des Fingerabdruckbildes erstellt. Ferner wird auch eine direkte Fouriertransformation des aufgenommenen Bildes beschrieben, die für eine Beurteilung der Qualität des Bildausschnittes jedoch nicht verwendet wird.

US-A-5 799 098 offenbart ein Verfahren zur Fingerabdruckauswertung, wobei ein Bild eines Fingerabdrucks erfaßt wird, wobei das Bild des Fingerabdrucks in Bildausschnitte unterteilt wird, die fouriertransformiert werden, und der Maximalwert des Frequenzspektrums wird ermittelt. Die Spektralwerte der fouriertransformierten Bildausschnitte werden untersucht, und eine Gaborfilterung im Ortsraum wird durchgeführt. In Abhängigkeit vom Ergebnis der Filterung werden Bereiche schlechter Qualität ausgesondert.

Vorteile der Erfindung

Die Erfindung wird in Verfahrensanspruch 1 und Vorrichtungsanspruch 1 definiert. Das erfindungsgemäße Verfahren mit den Merkmalen des Hauptanspruchs hat demgegenüber den Vorteil, dass eine direkte Auswertung der Bildausschnitte möglich ist, die zweidimensional fouriertransformiert wurden. Die Fouriertransformation ermöglicht zusammen mit einer erfindungsgemäßen Untersuchung des fouriertransformierten Bildausschnitts eine Aussage über die Eignung der Bildausschnitte für eine weitere Auswertung der Bildausschnitte auf einfache Weise, indem die Spektralwerte berechnet und/oder eine Spektralwertedichteverteilung bestimmt wird. Durch eine Untersuchung der Spektralwerte bzw. der Spektralwertdichte ist eine Aussage darüber möglich, wie sich die Spektralwerte im Frequenzraum verteilen, wobei eine zu große, ungleichmäßige Verteilung auf unregelmäßige Bildfrequenzen im Ausgangsbildausschnitt schließen lässt und solche Bildausschnitte für eine weitere Auswertung des Fingerabdrucks z.B. im Rahmen einer Fingerabdruckerkennung auszuschließen sind. Die Berechnung der Spektralwertdichte ist z.B. durch eine auf eine Summation zurückzuführende numerische Integration, ausführbar, so dass eine Aussage, ob ein Bildausschnitt für eine weitere Auswertung verwendbar ist, ohne komplizierte und aufwendige Filter- und Berechnungsvorgänge möglich ist.

Durch die in den Unteransprüchen aufgeführten Maßnahmen sind vorteilhafte Weiterbildungen und Verbesserungen des im Hauptanspruch angegebenen Verfahrens möglich. Insbesondere ist vorteilhaft, über die Spektralwerte zu integrieren, so dass von einer Recheneinheit die Spektralwertdichte in mindestens zwei Bereichen des fouriertransformierten Bildausschnitts im Frequenzraum sowie das Verhältnis der Spektralwertdichten zueinander bestimmt werden. Durch einen Vergleich der Spektralwertdichten in verschiedenen Bereichen ist eine Aussage über die Verwendbarkeit des Bildausschnitts möglich.

Besonders vorteilhaft ist dabei, eine Regressionsgerade durch Maxima der Spektralwerte zu legen, die im Frequenzraum ermittelt werden. Sowohl die Fouriertransformation als auch eine Regression sind leicht in einer Recheneinheit zu implementieren. Ist ein Bereich des Fingerabdrucks erfasst worden, in dem die Fingerabdrucklinien weitgehend parallel verlaufen und der damit für eine Fingerabdrucksabwertung geeignet ist, so entstehen im Frequenzraum zwei Maxima symmetrisch zum Ursprung des Frequenzraums. Die Spektralwertdichte außerhalb eines schmalen Bereichs um die Regressionsgerade darf nun einen vorgegebenen Wert, der vorzugsweise durch das Verhältnis zu der Spektralwertdichte in einem vorgebbaren, die Regressionsgerade umgebenden Bereich gegeben ist, nicht überschritten werden. Ist der Ausschnitt aus dem Bild des Fingerabdrucks ein Randbereich, ein Störungs- oder Hintergrundbereich oder ein Krümmungsbereich einer Fingerabdruckslinie, so sind entweder keine eindeutig identifizierbaren Maxima vorhanden bzw. die Maxima der Spektralwerte verteilen sich auf einen breiten Bereich, so dass bei einer Integration über einen schmalen, ersten Bereich entlang der Regressionsgerade sich eine verhältnismäßig geringere oder zumindest nicht viel größere Spektralwertdichte als außerhalb des Bereichs um die Regressionsgerade ergibt. Folglich ist eine einfache, rechnerische Ermittlung von auswertbaren und nicht auswertbaren Bereichen möglich. Vorzugsweise wird der Frequenzraum außerhalb der Regressionsgeraden noch in einzelne Teilbereiche zerlegt, um eine genauere Aussage erhalten zu können.

Weiterhin ist vorteilhaft, den fouriertransformierten Bildausschnitt im Frequenzraum entlang einer Symmetrielinie zu teilen und einen ersten Teil des Frequenzraums in halbkreisförmige Kreisringsegmente bezüglich des Ursprungs des Frequenzraums als Mittelpunkt und einem zu dem ersten Teil symmetrischen zweiten Teil des Frequenzraums in keilförmige Segmente mit den Keilkanten der Segmente im Ursprung des Frequenzraums zu zerlegen. Hierdurch kann eine radiale und tangentiale Ausbreitung von Maxima der Spektralwerte im Frequenzraum erfasst und berechnet werden, wodurch ein Hinweis auf gegebenenfalls vorhandene Störungen des erfassten Bildausschnitts des Fingerabdrucks gegeben wird.

Weiterhin ist vorteilhaft, vorzugsweise mittels Eigenwertbestimmung einer Trägheitstensormatrix der Spektralwerteverteilung eine Kohärenz der Trägheitstensormatrix zu bestimmen, da über den Trägheitstensor ermittelbar ist, wie gut eine Regressionsgerade im Frequenzraum Maxima der Spektralwerte folgt, wobei nicht nur die Maxima selbst, sondern alle Spektralwerte berücksichtigt werden, so dass eine sehr sichere Aussage über die Verwendbarkeit eines Bildausschnitts möglich ist.

Außerdem ist vorteilhaft, zwischen den einzelnen Teilbereichen zu interpolieren, damit Maxima, die in Grenzbereichen zwischen zwei Segmenten liegen, nicht zu einer Fehlinterpretation im Sinne einer Verteilung eines Maximums über mehrere Segmente bzw. Teilbereiche führen können.

Weiterhin ist vorteilhaft, dass der von der Recheneinheit gewählte Bildausschnitt quadratisch ist, da hierdurch gleiche Berechnungsroutinen sowohl für Bildzeilen als auch für Bildspalten des erfassten Bildausschnitts verwendet werden können.

Weiterhin ist vorteilhaft, dass der Bildausschnitt zwei bis fünf Papillarlinien umfasst, da hierdurch eine kleinschrittige Analyse des Fingerabdrucks möglich ist und hierdurch möglichst viele Bereiche für eine weitere Auswertung für tauglich befunden werden können.

Weiterhin ist vorteilhaft, dass ein Bildausschnitt nur dann verwendet wird, wenn die ermittelte Spektralwertdichte einen vorgegebenen Wert überschreitet. Hierdurch wird vermieden, dass in Bereichen des Fingerabdrucks, der nur sehr schwach erfasst worden ist und in dem der Kontrast der Fingerabdrucklinien sehr gering ist, Verschmutzungen zu einer Fehlidentifikation führen können.

Weiterhin ist vorteilhaft, dass der Bildausschnitt nur dann verwendet wird, wenn die Dichte der Spektralwerte in einem kreisringförmigen Ausschnitt vorzugsweise um den Ursprung des Frequenzraums einen vorgegebenen Wert überschreitet, wobei der kreisringförmige Ausschnitt dabei einen Bereich überdeckt, in dem durch Beabstandung der Fingerabdrucklinien hervorgerufene Maxima in allgemeinen zu erwarten sind. Dieser Bereich ergibt sich dabei aus der physiologischen Größe des zu erwartenden Abstands von Fingerabdrucklinien. Durch die Einschränkung auf diesen Bereich kann ein Teil der nicht für eine Fingerabdruckauswertung relevanten Bereiche des Frequenzraums bereits ohne eine weitere Untersuchung ausgesondert werden.

Es ist weiterhin vorteilhaft, dass die Bildausschnitte vor der Fouriertransformation digital gefiltert werden und hierbei der Kontrast vergrößert wird. Hierdurch ist es möglich, dass auch Bilder von dem Fingerabdruck mit einem schlechten Kontrast für eine Auswertung verwendet werden können.

Weiterhin ist vorteilhaft, dass der fouriertransformierte Bildausschnitt über einen Bandpass gefiltert wird, wobei hierdurch ein zu untersuchender Bereich auf einen Frequenzbereich eingeengt wird, in dem Fingerabdruckslinien im allgemeinen zu erwarten sind, so dass störende Frequenzen ausgeschlossen werden können.

Zeichnung

Ausführungsbeispiele der Erfindung sind in der Zeichnung dargestellt und in der nachfolgenden Beschreibung näher erläutert. Es zeigen Figur 1a ein erstes Ausführungsbeispiel für einen Sensor zur Fingerabdruckerkennung, Figur 1b ein weiteres Ausführungsbeispiel für einen solchen Sensor und Figur 1c ein drittes Ausführungsbeispiel. Figur 2 zeigt ein erstes erfindungsgemäßes Verfahren zur Fingerabdruckerkennung. Die Figuren 3a und 3b zeigen einen Bildausschnitt aus einem Fingerabdruck sowie eine Darstellung der Spektralwerte im Frequenzraum für einen Krümmungsbereich aus einem Fingerabdruck. Die Figuren 4a und 4b zeigen einen Bildausschnitt und eine Darstellung der Spektralwerte im Frequenzraum für einen Randbereich eines Fingerabdrucks. Die Figuren 5a und 5b zeigen einen Bildausschnitt und eine Darstellung der Spektralwerte bei einem Störungs- oder Hintergrundbereich eines Fingerabdrucks. Die Figuren 6a und 6b zeigen einen Bildausschnitt aus einem Fingerabdruck mit einer intakten Linienstruktur und die dazugehörige Darstellung der Spektralwerte im Frequenzraum. In der Figur 7a ist ein erstes Ausführungsbeispiel für ein erfindungsgemäßes Verfahren zur Bewertung eines Bildausschnittes für die Fingerabdruckerkennung dargestellt. In der Figur 7b ist ein Bildausschnitt mit einem Bereich um eine Regressionsgerade bei einer Bewertung eines Bildausschnittes nach dem zu der Figur 7a beschriebenen erfindungsgemäßen Verfahren dargestellt. In der Figur 8a ist ein zweites erfindungsgemäßes Verfahren zur Bewertung eines Bildausschnittes eines Fingerabdrucks dargestellt. Die Figur 8b zeigt eine Zerlegung eines Bildausschnittes im Frequenzraum gemäß einer sogenannten Wedge-Ring-Analyse. Figur 9 zeigt ein drittes Ausführungsbeispiel für ein erfindungsgemäßes Verfahren zur Bewertung eines Bildausschnittes für die Fingerabdruckerkennung. In der Figur 10 ist eine erfindungsgemäße Vorrichtung zur Durchführung des erfindungsgemäßen Verfahrens dargestellt. Figur 11 zeigt eine nach dem ersten und dem zweiten erfindungsgemäßen Verfahren erstellte Übersicht eines Bildes eines Fingerabdrucks, bei dem die einzelnen Bereiche des Fingerabdrucks dahingehend gekennzeichnet sind, ob sie zum Hintergrund gehören, ob sie zum Randbereich des Fingerabdrucks gehören, ob gestörte Bereiche und/oder Krümmungsbereiche in dem entsprechenden Bildausschnitt vorhanden sind oder ob in einem untersuchten Bildausschnitt eine intakte Linienstruktur vorliegt.

Beschreibung des Ausführungsbeispiels

Das erfindungsgemäße Verfahren zur Fingerabdruckauswertung ermöglicht es, aus einem vorzugsweise über einen Sensor erfassten Fingerabdruck diejenigen Bildausschnitte zu ermitteln, die für eine weitere Auswertung geeignet sind. Hierbei kann bereits bei der Erfassung eines Fingerabdrucks entschieden werden, ob der erfasste Fingerabdruck gespeichert werden kann und ob er für eine spätere Identifikation geeignet ist. Im folgenden wird das erfindungsgemäße Verfahren für eine Fingerabdruckerkennung erläutert, bei der ein Fingerabdruck anhand bereits gespeicherter Daten identifiziert wird.

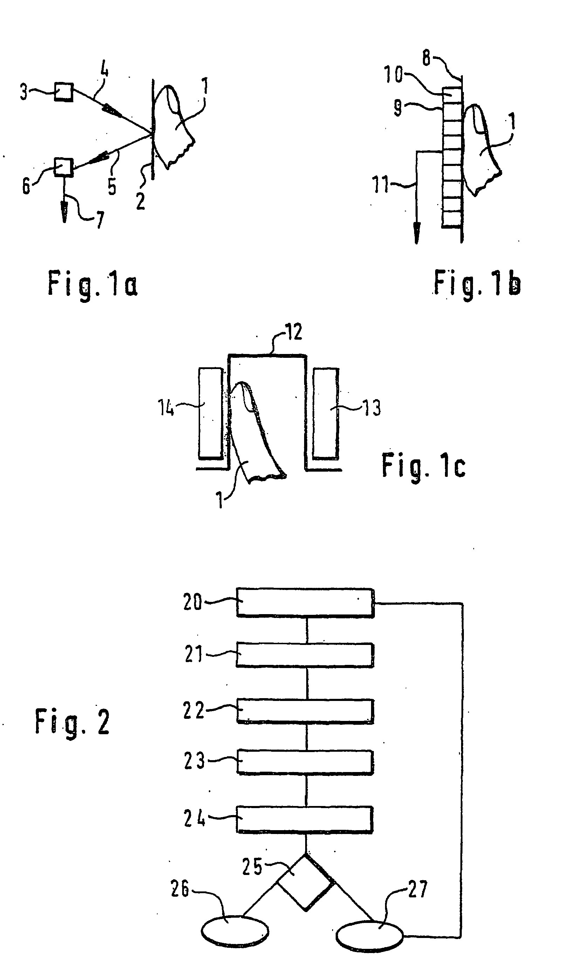

In der Figur 1a ist ein erstes Ausführungsbeispiel für einen Sensor dargestellt, durch den ein Bild eines Fingerabdrucks ermittelbar ist. In einer ersten Ausführung wird ein Finger 1 von einer Person, die sich über die Identifizierungsvorrichtung ausweisen möchte, auf eine Glasplatte 2 aufgebracht. Von einem Sender 3 wird ein vorzugsweise optischer Strahl 4 auf die Glasplatte gestrahlt, dessen Reflektion durch den auf der Glasplatte 2 angeordneten Finger 1 beeinflusst wird. Ein reflektierter Strahl 5 wird von einem Detektor 6 erfasst und zu einer Auswerteeinheit, die in der Figur 1a nicht dargestellt ist, über eine Datenverbindung 7 weitergeleitet. In einem ersten Ausführungsbeispiel ist der Sender 3 als eine optische Strahlungsquelle ausgeführt, wobei eine Reflektion eines optischen Strahles 4 an der Glasplatte 2 an den Stellen verändert wird, an dem die Fingerabdrucklinien an dem Finger 1 in einem optischen Kontakt zu der Glasplatte 2 treten. Über den Detektor 6 sind dann diese Fingerabdrucklinien erfassbar. In einem weiteren Ausführungsbeispiel kann der Sender 3 auch als eine Ultraschallstrahlungsquelle ausgestaltet sein, wobei auch in diesem Ausführungsbeispiel eine Reflektion an der Glasplatte 2 durch die den Fingerabdruck des Fingers 1 bildenden Fingerabdrucklinien beeinflusst wird.

In der Figur 1b ist ein weiteres Ausführungsbeispiel für einen Fingerabdrucksensor dargestellt. Der Finger 1 ist auf einer Kontaktfläche 8 angeordnet. Auf der dem Finger 1 abgewandten Seite der Kontaktfläche 8 ist eine Matrix 9 aus einzelnen Elementen 10 angeordnet, die vorzugsweise als Siliziumsensoren ausgeführt sind, wobei über eine Datenleitung 11 von der Matrix 9 erfasste Meßwerte an einer in der Figur 1b nicht dargestellte Auswerteeinheit weiterleitbar sind. In der Figur 1b sind die einzelnen Elemente 10 der Matrix 9 vergrößert dargestellt. Die einzelnen Elemente 10 erfassen vorzugsweise nur einen Teil einer Fingerabdrucklinie, so dass eine Erfassung einzelner Fingerabdrucklinien möglich ist. Eine Messung kann entweder thermisch oder kapazitiv erfolgen, wobei bei einer kapazitiven Messung eine erfasste Kapazität zwischen einzelnen Elementen 10 und einer Oberfläche des Fingers 1 von dem Abstand des Fingers 1 zu einer Oberfläche der einzelnen Elemente 10 abhängig ist, also ob an der Stelle des jeweiligen einzelnen Elements 10 eine durch die Fingerabdrucklinien hervorgerufene Vertiefung oder Erhöhung in dem Fingerabdruck des Fingers 1 vorliegt. Gleiches gilt für eine thermische Messung, bei der eine von den einzelnen Elementen 10 jeweils erfasste Temperatur davon abhängig ist, an welcher Stelle die Kontaktfläche 8 den Finger 1 an hervorstehenden Fingerabdrucklinien kontaktiert oder nicht.

In der Figur 1c ist ein weiteres Ausführungsbeispiel für eine Bestimmung des Bildes des Fingerabdrucks dargestellt. Ein Finger 1 ist in eine Vertiefung 12 eines Fingerabdrucksensors eingelegt. Die Infrarotlichtquelle 13 durchstrahlt den Finger, 1, wobei die Infrarotstrahlen nach dem Durchstrahlen des Fingers 1 an einem Detektor 14 erfasst werden. Hierdurch ist auch eine berührungslose Bestimmung des Fingerabdrucks möglich. Weiterhin kann während der Messung auch der Sauerstoffgehalt des Blutes in dem Finger 1 bestimmt werden, wobei erkannt werden kann, ob der Finger 1 durchblutet ist oder ob der Finger 1 vor der Identifikation abgetrennt wurde.

In der Figur 2 ist ein erfindungsgemäßes Verfahren zur Fingerabdruckerkennung beschrieben. In einem ersten Verfahrensschritt wird eine Erfassung 20 eines Fingerabdrucks durchgeführt, wobei ein Fingerabdruck vorzugsweise nach einem zu den Figuren 1a bis 1c beschriebenen Verfahren bildlich erfasst wird. In einem darauffolgenden zweiten Verfahrensschritt erfolgt eine Nachbearbeitung 21 des erfassten Bildes dahingehend, dass der Kontrast verstärkt wird, sodass eindeutig zwischen Bereichen, die eine Erhöhung des Fingerabdrucks darstellen, und Bereichen, die eine Vertiefung des Fingerabdrucks darstellen, unterschieden werden kann. In einem anschließenden dritten Verfahrensschritt 22 wird das Bild des Fingerabdrucks in einzelne Bereiche zerlegt. Die Bereiche sind vorzugsweise quadratisch und werden in einem anschließenden, vierten Verfahrensschritt 23 als einzelne Bildausschnitte aus dem Fingerabdruck dahingehend untersucht, ob sie für eine weitere Untersuchung tauglich sind. In einem anschließenden, fünften Verfahrensschritt 24 werden diejenigen Bildausschnitte bzw. Gruppen von Bildausschnitten, die für eine weitere Untersuchung geeignet sind mit entsprechenden Bildausschnitten von in einer Datenbank gespeicherten Sammlung von Fingerabdrücken verglichen. Hierbei werden auch Merkmale verglichen, die aus einer Zusammenschau mehrerer Bildausschnitte bestehen. In einem anschließenden Entscheidungsschritt 25 erfolgt bei einer hinreichenden Übereinstimmung eine Identifikation des Fingerabdrucks 26, wobei der Grad der hinreichenden Übereinstimmung vorzugsweise durch einen Benutzer vorgebbar ist. Kann im Rahmen der vorgegebenen Toleranz keine Identifikation erfolgen, so erfolgt eine Zurückweisung der Identifikation 27. Um eine erneute Identifikation zu ermöglichen, wird zu einer wiederholten Erfassung 20 des Fingerabdrucks zurückverzweigt. Das zu der Figur 2 beschriebene Verfahren ist in einem bevorzugten Ausführungsbeispiel in einer Recheneinheit implementiert, die einer Fingerabdruckerfassungsvorrichtung zugeordnet ist.

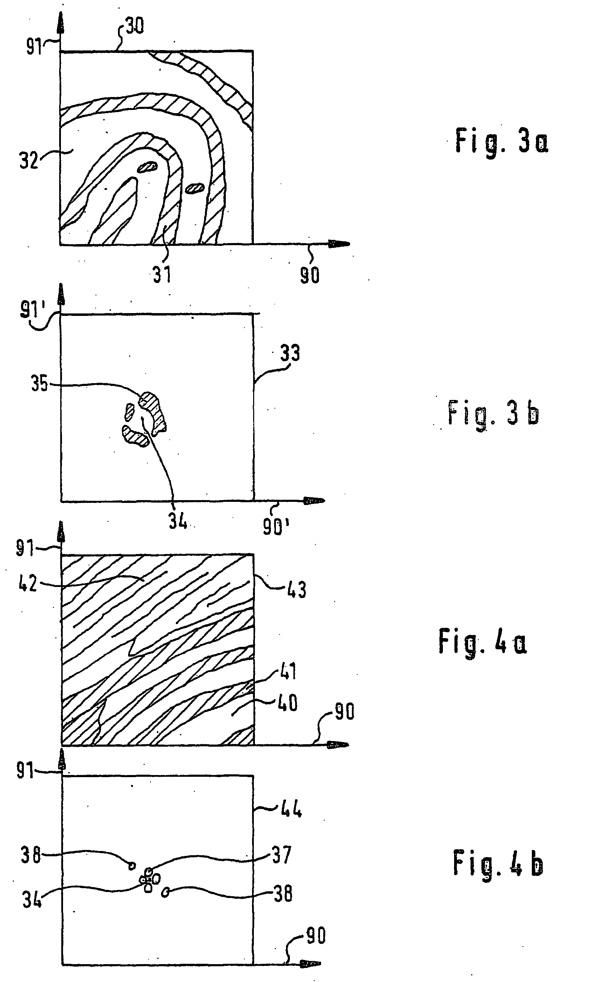

In der Figur 3a ist ein Bildausschnitt 30 aus einem Fingerabdruck dargestellt, in dem gekrümmte Fingerabdrucklinien 31 dargestellt sind. Der Bildausschnitt ist in einzelne Bildpunkte zerlegt, die aus Gründen der Übersichtlichkeit der Zeichnung in der Figur 3a nicht einzeln dargestellt sind. Zwischen den Fingerabdrucklinien 31, bei denen ein Aufliegen des Fingers z.B. auf einen Sensor ermittelt wurde, sind Linientäler 32 abgesetzt dargestellt. Die einzelnen Bildpunkte des Bildausschnittes 30 sind in einem bevorzugten Ausführungsbeispiel in verschiedene Helligkeits- und/oder Farbstufen ausbildbar, so dass in Abhängigkeit von einem Sensorsignal eine entsprechende Helligkeits- und/oder Farbstufe gewählt wird. Aus Gründen der Übersichtlichkeit der Zeichnung ist in der Figur 3a nur eine Unterscheidung zwischen Fingerabdrucklinie 31 und Liniental 32 getroffen. Ebenfalls sind die Bildpunkte in der Figur nicht einzeln dargestellt. Der Bildausschnitt 30 ist über einer x-Achse 90 und über einer y-Achse 91 aufgetragen. Der Bildausschnitt 30 ist quadratisch gewählt. In der Figur 3b ist der Bildausschnitt 30 fouriertransformiert in einem Ausschnitt 33 im Frequenzraum dargestellt. Der Ursprung 34 des Frequenzraums befindet sich in dem Zentrum des Graphen in der Figur 3b. Auf einer x-Achse 90' des Frequenzraums sind die Frequenzen in x-Richtung und auf einer y-Achse 91' die Frequenzen in y-Richtung bezüglich der an der Figur 3a angegebenen x- und y-Richtung aufgetragen. In einem schraffierten Bereich 35 überschreiten die Beträge der Spektralwerte eine vorgegebene Grenze. Aus Gründen der Übersichtlichkeit der Zeichnung wird in der Figur 3 keine feinere Auftragung der Spektralwerte dargestellt. Die Spektralwerte sind der Betrag der spektralen Leistungsdichte zu der jeweiligen Frequenz. An dem Ursprung 34 im Frequenzraum, dem der Gleichanteil des Bildausschnitts zugeordnet ist, ist der Gleichanteil hier und im Folgenden zur besseren Übersichtlichkeit der Zeichnung ausgeblendet. Maxima der Spektralwerte sind in dem schraffierten Bereich 35 ringförmigen um den Ursprung 34 des Frequenzraums angeordnet. Dies folgt daraus, dass die Fingerabdrucklinien 31 in dem Bildausschnitt 30 in der Figur 3a gekrümmt sind. Damit weist der Bildausschnitt für die durch den Abstand der Fingerabdrücklinien gegebene Frequenz fast in alle Richtungen in dem Bildausschnitt die gleiche Verteilung der Spektralwerte auf. Ein in dem Bildausschnitt 30 gezeigter Krümmungsbereich ist für eine Auswertung nicht geeignet, da es für eine nachfolgende Analyse äußerst schwierig ist, den Verlauf der Fingerabdrucklinien 31 hierbei zu erfassen.

In der Figur 4a ist ein Bildausschnitt 43 aus einem Randbereich eines Fingerabdrucks dargestellt. Während in einem Bereich noch Fingerabdrucklinien 40 und Linientäler 41 schwach zu erkennen sind, so ist in einem Bereich 42 des Bildausschnittes 43 keine Struktur mehr zu erkennen. In dem Bereich 42 hat sich der Finger bereits von der Fläche abgehoben, die der Detektion des Fingerabdrucks dient, zum Beispiel von der Glasplatte 2 oder von der Kontaktfläche 8. In der Figur 4b sind zu dem Bildausschnitt 43 die Spektralwerte über den Frequenzraum in einem Ausschnitt 44 aufgetragen. Die Darstellungen in den Figuren 4a und 4b entsprechen dabei der Darstellung in den Figuren 3a bzw. 3b. Bei der Darstellung in der Figur 4b streuen die Spektralwerte, deren Wert über einer vorgegebenen Grenze liegt, in einem Bereich 37 um den Ursprung 34 des Frequenzraums. Maxima lassen sich nicht eindeutig ermitteln. Außerhalb des Bereichs 37 sind schwach zwei Maxima 38 zu erkennen, die für eine Festlegung einer bevorzugten Richtung der Maxima in dem Ausschnitt 44 jedoch nicht ausreichen. Damit ist der in dem Bildausschnitt 43 in der Figur 4a gezeigte Randbereich eines Fingerabdrucks für eine weitere Analyse nicht geeignet, da in diesem Bereich keine oder keine ausreichenden Informationen über Fingerabdrucklinien vorliegen und durch eine Vermeidung einer Untersuchung eines derartigen Randbereichs Rechenzeit eingespart werden kann. In einem bevorzugten Ausführungsbeispiel wird ein Bildausschnitt dann als ein Randbereich identifiziert, wenn bei den Feldern des Frequenzraums, die direkt an einen den Gleichanteil angebenden Bereich um den Ursprung 34 grenzen, ein vorgegebener Schwellwert überschritten wird.

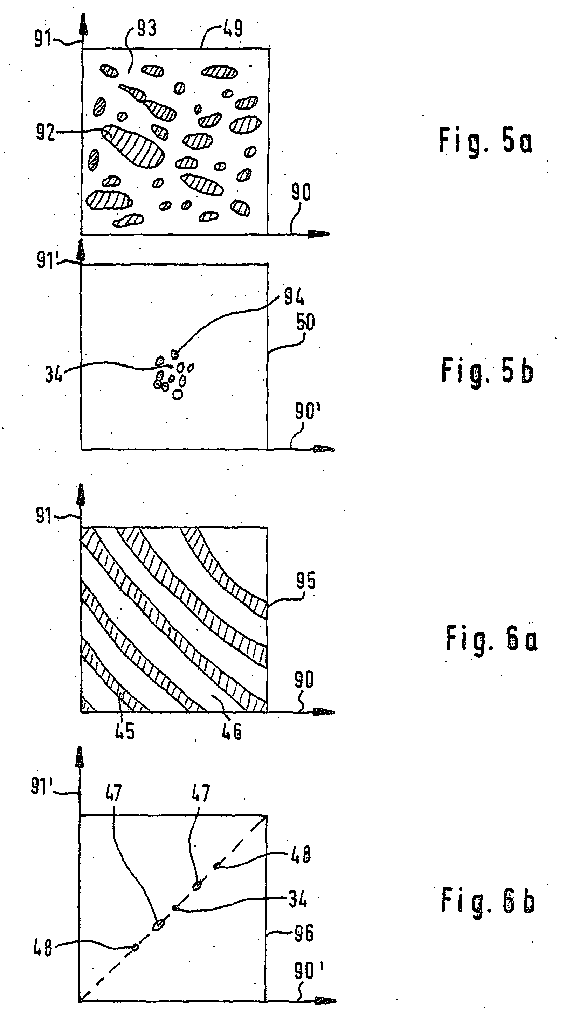

In der Figur 5a ist ein Bildausschnitt 49 aus einem Fingerabdruck ausgewählt, bei dem die Bilderfassung gestört ist. Eine Ursache kann z.B. in einer Verschmutzung des Fingers 1, der Glasplatte 2 und/oder der Kontaktfläche 8 liegen. In dem Bildausschnitt 49 ist ein strukturloses Muster erkennbar, das sich in der Figur 5a aus schraffierten Bereichen 92 und nicht schraffierten Bereichen 93 zusammensetzt. Die von dem Sensor erfassten Signale können somit kein erkennbares Bild geben. Eine Struktur oder Fingerabdrucklinien lassen sich in der Figur 5a nicht erkennen. Die Darstellung in den Figuren 5a und 5b entspricht ebenfalls der Darstellung in den Figuren 3a und 3b. In der Figur 5b sind die Spektralwerte in einem Ausschnitt 50 des Frequenzraumsydargestellt. Um den Ursprung herum streuen Maxima 94 der Spektralwerte so stark, dass den Maxima keine eindeutige Vorzugsrichtung im Frequenzraum zugewiesen werden kann. Der Bildausschnitt 49 ist aufgrund dieser Störung für eine weitere Analyse ebenfalls nicht verwendbar.

In der Figur 6a ist ein Bildausschnitt 95 aus einem Fingerabdruck mit einer intakten Linienstruktur dargestellt. Zweifelsfrei lassen sich nahezu parallel verlaufende Linienberge 45 und Linientäler 46 trennen. Auch die Figuren 6a und 6b entsprechen in der Art der Darstellung den Figuren 3a und 3b. In der Figur 6b zeigt ein Ausschnitt 96 den fouriertransformierten Bildausschnitt, bei dem sich eindeutig zwei Maxima erster Ordnung 47 und zwei Maxima zweiter Ordnung 48 identifizieren lassen. Alle Maxima 47, 48 liegen auf einer Geraden 97, die in der Figur 6b gestrichelt eingezeichnet ist. Die Gerade 97 gibt eine Richtung der Maxima im Frequenzraum vor. Der in der Figur 6a in dem Bildausschnitt 95 erfaßte Bereich des Fingerabdrucks ist für eine weitere Analyse gut geeignet, da die Richtung der Fingerabdrucklinien durch eine Recheneinheit gut erfasst und für eine Fingerabdruckerkennung weiterverarbeitet werden kann.

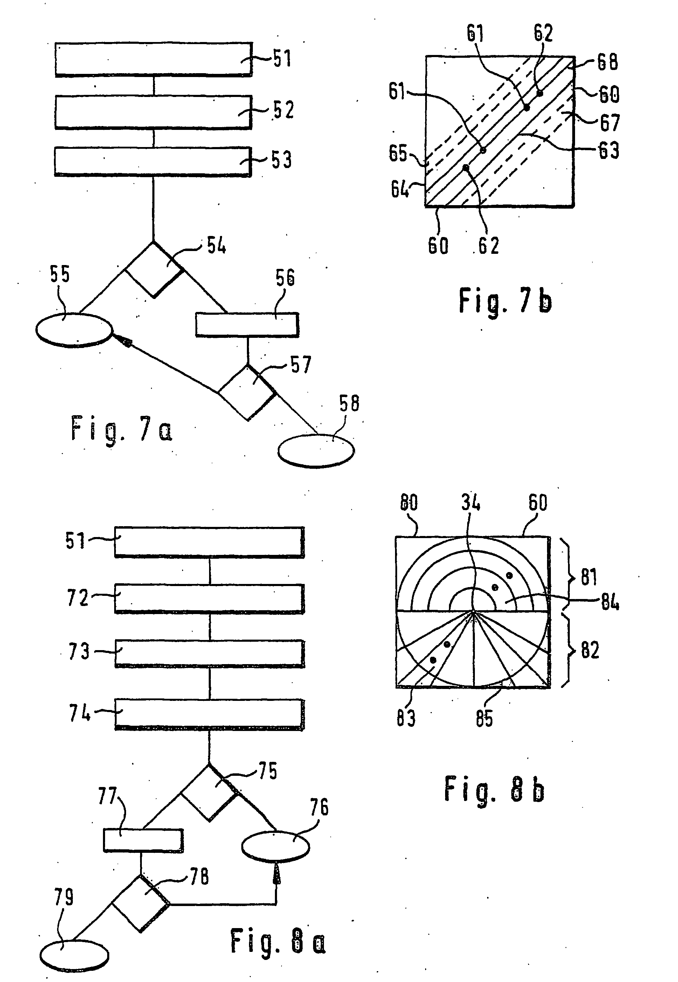

In der Figur 7a ist ein erstes Ausführungsbeispiel für ein erfindungsgemäßes Verfahren für die Bewertung eines Bildausschnittes aus einem Fingerabdruck dargestellt, z.B. eines Bildausschnitts gemäß den Figuren 3a, 4a, 5a oder 6a. Das in der Figur 7a beschriebene Verfahren ist dabei ein Ausführungsbeispiel für den vierten Verfahrensschritt 23 zur Bewertung der einzelnen Bildausschnitte gemäß der Figur 2. In einem Transformationsschritt 51 wird eine Fouriertransformation des Bildausschnittes durchgeführt. Es erfolgt eine zweidimensionale Fouriertransformation, bei der einerseits die Frequenzen in einer x-Richtung und andererseits die Frequenzen in einer y-Richtung des Bildausschnitts ermittelt werden, wobei sich z.B. bei einer Graustufenerfassung des Bildausschnitts die ermittelten Frequenzen auf die Abfolge heller und dunkler Bildbereiche beziehen. Eine durch Fingerabdrucklinien vorgegebene, regelmäßige Abfolge heller und dunkler Bereich ist z.B. in der Figur 6a erkennbar. Der fouriertransformierte Bildausschnitt wird in einzelne Felder aufgeteilt, wobei gleiche Anteile für die Frequenz 0 herausgefiltert werden. In einem ersten Ausführungsbeispiel werden in einem anschließenden ersten Auswerteschritt 52 lokale Maxima der Spektralwerte des fouriertransformierten Bildausschnitts im Frequenzraum bestimmt. In einem anschließenden Analyseschritt 53 wird von einer Recheneinheit durch diese Maxima eine Regressionsgerade 68 gelegt, wobei die Regressionsgerade 68 so gewählt wird, dass ein Regressionskoeffizient minimal wird. In einem anschließenden ersten Überprüfungsschritt 54 wird überprüft, ob der Regressionskoeffizient eine vorgegebene Schwelle, z.B. 0,9 unterschreitet. Ist dies der Fall, so liegen die Maxima nicht hinreichend auf einer Linie, d.h. die spektrale Leistungsdichte streut zu stark um die Regressionsgerade 68. Dies ist z.B. in den Figuren 3b und 5b eindeutig der Fall. In diesem Fall ist der Bewertungsschritt für den entsprechenden Bildausschnitt beendet und es wird zu einem ersten Bewertungsschritt 55 weiterverzweigt, in dem der entsprechende Bildausschnitt dahingehend gekennzeichnet wird, dass er für eine weitere Analyse des Fingerabdrucks nicht mehr verwendet wird. Ist der Regressionskoeffizient größer als eine vorgegebene Grenze, so wird zu einem zweiten Auswerteschritt 56 weiter verzweigt. Der zweite Auswerteschritt 56 wird anhand der Figur 7b erläutert. In der Figur 7b ist ein fouriertransformierter Bildausschnitt 60 mit einer Spektralwertdarstellung entsprechend der Figur 6b dargestellt, in dem jeweils ein erstes Maximum 61 und ein zweites Maximum 62 von Spektralwerten dargestellt ist. Diese Darstellung entspricht einer intakten Linienstruktur gemäß dem in der Figur 6a dargestellten Bildausschnitt aus einem Fingerabdruck. Die Maxima 61, 62 sind in einem Streifen 63 angeordnet, über den die Spektralwerte integriert werden. Der Größe des Streifens ist dabei vorgebbar. In einem bevorzugten Ausführungsbeispiel deckt der Steifen einen Bereich von +/- 2,5% um die Regressionsgerade 68 ab. Ferner wird auch der Bereich außerhalb des Streifens 63 bezüglich der Spektralwerte integriert. Für beide Bereiche wird eine Spektralwertdichte berechnet, die sich aus dem Verhältnis des Integrals zu der Fläche ergibt, über die Größe der Fläche im Frequenzraum ergibt, über die integriert wurde. In einem bevorzugten Ausführungsbeispiel wird der Bereich außerhalb des Bereichs um die Regressionsgerade 68 nochmals in jeweils einzelne Bereiche 64, 65, 66, 67 zerlegt, die parallel zu dem Streifen 63 und zu der Regressionsgeraden 68 verlaufen. Die Spektralwertdichte wird für jeden einzelnen Bereich berechnet. Ist nun eine ermittelte Spektralwertdichte in dem Streifen 63 nicht um ein je nach gewünschter Genauigkeit vorgegebenes Verhältnis, z. B. in einem Bereich von 30 bis 300, in einem bevorzugten Ausführungsbeispiel 100, größer als die Spektralwertdichte außerhalb des Streifens 63, also z.B. jeweils in den einzelnen Bereichen 64, 65, 66, 67, so ist die Spektralwertdichte zu sehr verteilt, und die Maxima liegen nicht hinreichend auf einer Linie. Dies kann z.B. ein Hinweis auf einen Krümmungsbereich, wie er z.B. in der Figur 3a dargestellt ist, oder auf einen Störungsbereich sein, wie er z.B. in der Figur 5a dargestellt ist. In einem an den zweiten Auswerteschritt 56 anschließenden zweiten Überprüfungsschritt 57 wird in diesem Fall ebenfalls zu dem ersten Bewertungsschritt 55 weiterverzweigt. Wird dagegen festgestellt, dass ein vorgegebener Anteil der Spektralwertdichte sich auf den Streifen 63 konzentriert, so wird zu dem zweiten Bewertungsschritt 58 weiterverzweigt. In diesem Fall sind, wie z.B. in der Figur 6a dargestellt, die Linienberge 45 und die Linientäler 46 hinreichend parallel, sodass sich die Maxima für die Frequenzen in einem schmalen Streifen 63 wie in der Figur 7b dargestellt ausbilden. Der analysierte Bereich wird nun für eine weitere Analyse in dem an den vierten Verfahrensschritt 23 anschließenden fünften Verfahrensschritt 24 weiter verwendet. In einem weiteren, in der Figur 7b nicht dargestellten Ausführungsbeispiel ist es auch möglich, das angegebene Verfahren anstelle für eine Untersuchung eines Streifens 63 für eine andere Zerlegung des fouriertransformierten Bildausschnitts zu verwenden. In einem weiteren bevorzugten Ausführungsbeispiel wird hierbei der Frequenzraum in noch zu der Figur 8b zu erläuternde keilförmige Segmente 83 zerlegt.

In der Figur 8a ist ein zweites erfindungsgemäßes Verfahren zur Bewertung eines Bildausschnittes aus einem Fingerabdruck dargestellt. Der erste Verfahrensschritt entspricht dem Transformationsschritt 51 gemäß dem zu der Figur 7a beschriebenen Verfahren. In einem zweiten Verfahrensschritt 72 wird der fouriertransformierte Bildausschnitt in eine obere und eine untere Hälfte geteilt, wobei die Symmetrie des Frequenzraums ausgenutzt wird, da die Spektralwerte, also der Betrag der Fourierkoeffizienten, eine reelle Projektion der komplexen Fourierkoeffizienten sind. Dabei ist das Spektrum konjugiert komplex symmetrisch zu dem Ursprung 34 des Frequenzraums, weil das Bildsignal stets reellwertig ist. In der Figur 8b ist eine Darstellung eines fouriertransformierten Bildausschnitts gemäß der Figur 6b dargestellt. Eine rechteckförmige, obere Hälfte 81 des fouriertransformierten Bildausschnitts ist in halbkreisförmige Kreisringsegmente mit dem Ursprung 34 im Kreismittelpunkt zerlegt. Eine untere Hälfte 82 ist in keilförmige Segmente 83 zerlegt, wobei die Keilkanten der einzelnen keilförmigen Segmente 83 jeweils in dem Ursprung 34 des Frequenzraumes liegen. Die hierbei entstehenden Sektoren werden durch einen Umfangskreis 85 abgegrenzt, dessen Durchmesser in einem bevorzugten Ausführungsbeispiel der Breite des fouriertransformierten Bildausschnitts entspricht. In einem dritten Verfahrensschritt 73 werden über die einzelnen halbkreisförmigen Kreisringsegmente 84 und die einzelnen keilförmigen Segmente 83 jeweils die Spektralwerte integriert und die jeweilige Spektralwertdichte wird von der Recheneinheit ermittelt. In einem anschließenden ersten Auswerteschritt 74 werden unter Ausnutzung der Punktsymmetrie der oberen Hälfte 81 des fouriertransformierten Bildausschnitts 80 zu der unteren Hälfte 82 sowohl für die halbkreisförmigen Kreisringsegmente 84 als auch für die keilförmigen Segmente 83 jeweils ein halbkreisförmiges Kreisringsegment und ein keilförmiges Segment 83 mit einer maximalen Spektralwertdichte bestimmt. In einem anschließenden ersten Überprüfungsschritt 75 wird festgestellt, ob sowohl das halbkreisförmige Kreisringsegment als auch das keilförmige Segment mit dem maximalen Wert der Spektralwertdichte um einen vorgegebenes Verhältnis, z.B. in einem Bereich von 2 - 10, 3 in einem bevorzugten Ausführungsbeispiel, größer ist als die Spektralwertdichten der übrigen halbkreisförmigen Kreisringsegmente bzw. der keilförmigen Segmente. Ist wie in dem in der Figur 8b gezeigten Beispiel der Maximalwert der Spektralwertdichte auf ein Kreisringsegment und ein keilförmiges Segment 83 beschränkt, so sind hierdurch ein solches gesuchtes halbkreisförmiges Kreisringsegment und ein keilförmiges Segment gegeben. Durch das erfindungsgemäße Verfahren können hierbei auf einfache Weise Verbreiterungen eines Maximums in radialer Richtung bezüglich des Abstands zum Ursprung 34 des Frequenzraums, also zur Mitte des fouriertransformierten Bildausschnitts, als auch in tangentialer Richtung senkrecht zum Abstand zum Ursprung 34 des Frequenzraums ermittelt werden. Wird ein halbkreisförmiges Kreisringsegment 84 und ein keilförmiges Segment 83 mit einer maximalen Spektralwertdichte identifiziert, wird in dem ersten Überprüfungsschritt 75 zu einem ersten Bewertungsschritt 76 des fouriertransformierten Bildausschnitts 60 weiterverzweigt. Der zu dem fouriertransformierten Bildausschnitt 60 gehörende Bildausschnitt weist dann eine Linienstruktur der Fingerabdrucklinien z.B. gemäß der Figur 6a auf und kann für eine weitere Analyse des Fingerabdrucks verwendet werden. Wird ein solches Element nicht eindeutig ermittelt so besteht außerdem die Möglichkeit, dass ein Maximum ungefähr auf die Grenze von zwei Bereichen fällt. Um einen Fehler hierdurch zu vermeiden ist in einem ersten Ausführungsbeispiel in einem an den ersten Überprüfungsschritt 75 anschließenden Unterteilungsschritt 77 eine modifizierte Aufteilung des fouriertransformierten Bildausschnitts vorgenommen, in dem die Bereichsgrenzen zwischen den radialen und keilförmigen Segmenten in die Mitte zwischen den bisherigen Bereichsgrenzen gelegt werden.

In einem zweiten Überprüfungsschritt 78 wird nun erneut überprüft, ob ein halbkreisförmiges Kreisringsegment 84 oder ein keilförmiges Segment 83 mit einer maximalen, integrierten Spektralwertdichte existiert. Ist dies der Fall, so wird zu dem ersten Bewertungsschritt 76 weiterverzweigt und der Bildausschnitt wird für eine weitere Analyse des Fingerabdrucks berücksichtigt. Ist dies nicht der Fall, so wird zu einem zweiten Bewertungsschritt 79 weiterverzweigt und der zu dem fouriertransformierten Bildausschnitt 60 gehörende Bildausschnitt wird bei einer weiteren Analyse des Fingerabdrucks nicht berücksichtigt. In einem weiteren, in der Zeichnung nicht dargestellten Ausführungsbeispiel erfolgt anstelle einer erneuten Zerlegung eine Interpolation zwischen den Spektralwertdichten benachbarter Kreisring- bzw. keilförmiger Segmente. In einem bevorzugten Ausführungsbeispiel wird dabei keine feste Grenze zwischen einzelnen Segmenten festgelegt, sondern z.B. mittels einer geeigneten Gewichtungsfunktion wird ein quasikontinuierlicher Übergang zwischen einzelnen Segmenten realisiert.

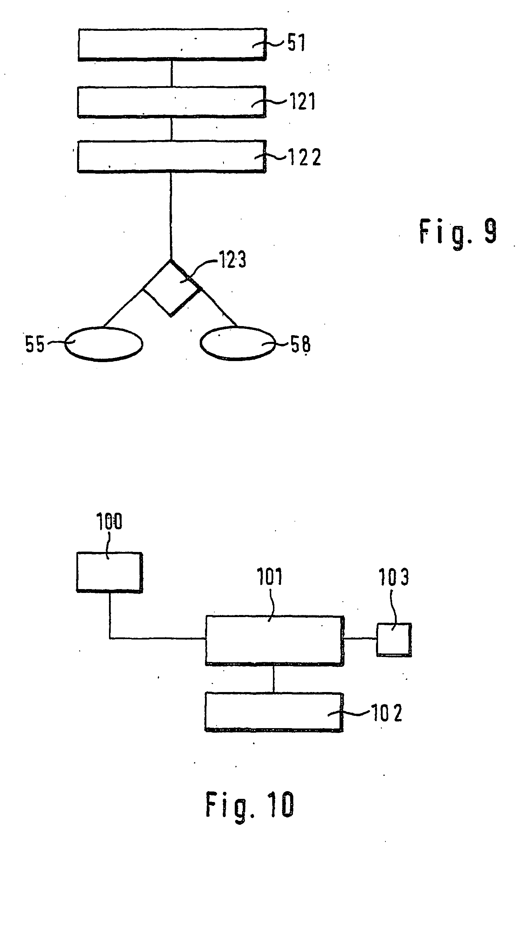

In der Figur 9 ist ein drittes Ausführungsbeispiel für ein erfindungsgemäßes Verfahren zur Bewertung eines Bildausschnittes für die Fingerabdruckerkennung dargestellt. Nach einem Transformationsschritt 51, der mit dem bereits zu der Figur 7a erläuterten Transformationsschritt übereinstimmt, schließt sich ein Minimierungsschritt 121 an, bei dem das Integral

$$J = \iint \vec{k}_0 \begin{bmatrix} x \\ y \end{bmatrix} \cdot \left| \hat{I}(x,y) \right|^2 dxdy$$

minimiert wird. Hierbei bezeichnet $\vec{k}_0$ den Einheitsvektor in Richtung einer optimalen Regressionsgerade, wobei hierbei für eine Bestimmung der optimalen Regressionsgeraden nicht nur die Maxima, sondern alle Werte der mit $|\hat{I}(x,y)|$ bezeichneten Spektralwerte berücksichtigt werden. Die Integration läuft dabei über den gesamten für die Fouriertransformation berücksichtigten Frequenzraum. x und y sind dabei die Variablen für die Frequenzen in x- und y-Richtung. Eine weitere Auswertung erfolgt dann gemäß der in dem Buch von B. Jähne, Digitale Bildverarbeitung, Springer Verlag 1993 beschriebenen Verfahren, in dem das vorliegende Minimalisierungsproblem auf ein mechanisches Problem zurückgeführt wird, bei dem eine Rotationsachse durch den Ursprung eines Koordinatensystems zu finden ist, bei dem ein Körper mit einer gegebenen Dichteverteilung mit einem minimalen Trägheitsmoment rotiert. In dem vorliegenden Fall ist eine Analogie zwischen der mechanischen Massedichteverteilung und dem Leistungsdichtespektrum im Frequenzraum zu ziehen. Ein Trägheitstensor eines Körpers kann nun durch einen symmetrischen Trägheitstensor wie folgt beschrieben werden:

$$J = \begin{bmatrix} x & y \end{bmatrix} \begin{bmatrix} J_{11} & J_{12} \\ J_{12} & J_{22} \end{bmatrix} \begin{bmatrix} x \\ y \end{bmatrix}$$

für eine beliebige durch den Vektor (x y) beschriebene Achse. Eine Minimierung des oben angeführten Integrals erhält man dabei mit

$$J_{xx} = \int k^2 |\hat{I}(x,y)|^2 \, dxdy$$

$$J_{yy} = \int \acute{y}^2 |\hat{I}(x,y)|^2 \, dxdy$$

$$J_{xy} = \int ky |\hat{I}(x,y)|^2 \, dxdy$$

für das Diagonalelement.

In einem anschließenden Auswerteschritt 122 wird eine Kohärenz der Trägheitstensormatrix bestimmt. Die Kohärenz C ist gegeben durch:

$$C = \left( \frac{J_1 - J_2}{J_1 + J_2} \right)^2 = \frac{(J_{xx} - J_{yy})^2 + 4 \cdot J_{xy}^2}{(J_{xx} + J_{yy})^2}$$

Hierbei bezeichnen $J_1$ und $J_2$ die Eigenwerte der Trägheitstensormatrix. Sind beide Eigenwerte gleich, so liegt eine isotrope Struktur vor, d.h. in dem fouriertransformierten Bildausschnitt gibt es keine ausgezeichnete Richtung in der Verteilung der Spektralwerte. Sind in einem Spezialfall beide Eigenwerte null, so liegt ein konstanter Grauwertebereich vor, bei dem kein Fingerabdruckssignal erfasst wurde. Sind hierbei die beiden Eigenwerte gleich oder unterscheiden sich die Eigenwerte nur sehr gering, so ist die Kohärenz null oder nahe bei null. Ist ein Eigenwert null und ein anderer ungleich null, so wird durch den Trägheitstensor eine Gerade beschrieben. Ist hierbei die Kohärenz C gleich 1 oder nahe 1, ist eine Auswertung des Bildausschnitts möglich, da eine Spektralwerteverteilung auf einer Linie im fouriertransformierten Bildausschnitt liegt und folglich ein regelmäßiges Fingerabdruckslinienmuster nicht gekrümmter Fingerabdrucklinien vorliegt. In einem anschließenden Entscheidungsschritt wird daher zu dem ersten Bewertungsschritt 55 verzweigt, also zu einem Ausschluss des Bildausschnitts, wenn die Kohärenz C kleiner als ein vorgegebener Wert ist, z.B. 0,6. Andernfalls wird zu dem zweiten Bewertungsschritt 58 verzweigt.

In der Figur 10 ist eine erfindungsgemäße Vorrichtung zur Analyse des Fingerabdrucks dargestellt. Ein Sensor 100 dient dazu, eine Abbildung des Fingerabdrucks zu erstellen. Die erfasste Abbildung leitet der Sensor 100 an eine Recheneinheit 101 weiter, die das Bild des Fingerabdrucks speichert, in einzelne Bildausschnitte zerlegt, und eine erfindungsgemäße Analyse der einzelnen Bildausschnitte des Bildes des Fingerabdrucks durchführt. In einer Datenbank 102, die mit der Recheneinheit 101 verbunden ist, sind Fingerabdrücke gespeichert, die die Recheneinheit 101 mit den ermittelten Bildausschnitten oder mit Merkmalen, die aus mehreren Bildausschnitten bestehen verglichen die für eine Analyse vorgesehen sind. Wird eine hinreichende Übereinstimmung festgestellt, so wird ein positives Signal an eine Ausgabeeinheit 103 weitergeleitet. Die Ausgabeeinheit 103 kann z.B. ein Türschloss eines Kraftfahrzeugs sein, das bei einer Identifikation von zugelassenen Personen, z. B. dem Besitzer und seine Familie, die Tür des Fahrzeugs öffnet.

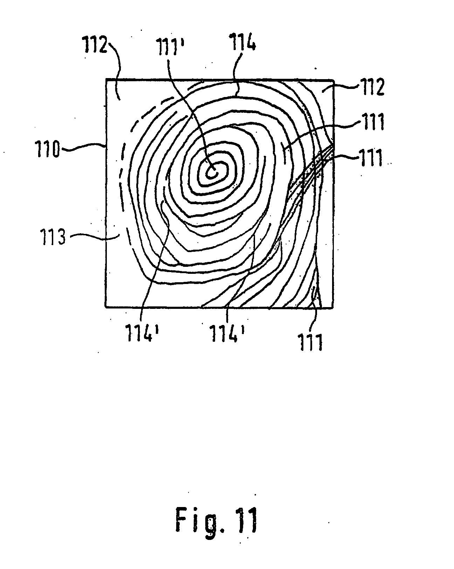

In der Figur 11 ist das Bild 110 eines Fingerabdrucks dargestellt, das aus einzelnen Bildausschnitten zusammengesetzt ist, in die das Bild 110 unterteilbar ist. Aus Gründen der Übersichtlichkeit der Zeichnung, ist eine Unterteilung des Bildes 110 in Bildausschnitte gemäß der Figuren 3a, 4a, 5a beziehungsweise 6a in der Figur 11 nicht eingezeichnet. In der Figur 11 sind Fingerabdrucklinien 114 erkennbar. Die Fingerabdrucklinien 114 führen zu Randbereichen 112, in denen keine Fingerabdrucklinien erkennbar sind. Zwischen den Bereichen der Fingerabdrucklinien 114 und den Randbereichen 112 liegt ein Übergangsbereich 113, in dem die Fingeradrucklinien 114 nicht mehr vollständig erfaßt wurden. Ferner sind in der Figur 11 Störungsbereiche 111 erkennbar, in denen Linienstrukturen oder Verschmutzungen eine Auswertung der Fingerabdrucklinien 114 unmöglich machen. Das Bild 110 wird in einzelne Bildausschnitte zerlegt, die wie oben beschrieben dahingehend untersucht werden, ob sie für eine nachfolgende Fingerabdruckerkennung geeignet sind und ob sie für die Fingerabdruckerkennung verwendet werden. Eine Unterteilung in Bildausschnitte erfolgt in der Weise, das z.B. das Bild 110 in Bildausschnitte gemäß den Figuren 3a, 4a, 5a und 6a vollständig zerlegt wird. Eine Unterteilung selbst ist in der Figur 11 aus Gründen der Übersichtlichkeit der Zeichnung nicht eingezeichnet. Die Randbereiche 112, die Übergangsbereiche 113 und die Störungsbereiche 111 werden bei einer Analyse des Bildes 110 des Fingerabdrucks nicht weiter verfolgt. Insbesondere sind auch Krümmungsbereiche 111' anzuführen, in denen durch eine Krümmung der Fingerabdrucklinien eine Auswertung ebenfalls nicht erfolgt. Für die Fingerabdruckerkennung sind dabei vor allem Bereiche 114' des Fingerabdrucks von Interesse, in denen die Fingerabdrucklinien 114 beginnen bzw. enden, sogenannte Minuzien. In einer bevorzugten Ausführung der Fingerabdruckerkennung werden insbesondere die Stellen solcher Minuzien in einem Fingerabdruck identifiziert und mit den Daten von gespeicherten Fingerabdrücken verglichen. Bei einer hinreichenden Übereinstimmung erfolgt eine positive Identifikation. Für eine weitere beziehungsweise genauere Erkennung können die übrigen Fingerabdrucklinien 114 hinzugezogen werden.

**Patentansprüche**

1. Verfahren zur Fingerabdruckauswertung, wobei ein Bild eines Fingerabdrucks erfasst wird, wobei das Bild des Fingerabdrucks in Bildausschnitte unterteilt wird, wobei die Bildausschnitte fouriertransformiert werden, **dadurch gekennzeichnet, dass** ein fouriertransformierter Bildausschnitt in mindestens zwei Bereiche unterteilt wird, dass aus den Spektralwerten für Bereiche des fouriertransformierten Bildausschnitts eine Spektralwertdichte berechnet wird, dass die in einem ersten Bereich ermittelte Spektralwertdichte mit der in einem zweiten Bereich ermittelten Spektralwertdichte verglichen wird und dass der zugehörige Bildausschnitt für eine weitere Auswertung dann verwendet wird, wenn in dem erstem Bereich eine um ein vorgegebenes Verhältnis größere Spektralwertdiehte als in dem zweiten Bereich ermittelt wird.

2. Verfahren nach Anspruch 1, **dadurch gekennzeichnet, dass** Maxima der Spektralwerte bestimmt werden, dass eine durch die Maxima bestimmte Regressionsgerade berechnet wird, dass als ein erster Bereich ein vorgebbarer Bereich um die Regressionsgerade festgelegt wird und dass als ein zweiter Bereich ein Bereich außerhalb des ersten Bereiches um die Regressionsgerade festgelegt wird.

3. Verfahren nach einem der Ansprüche 1-2, **dadurch gekennzeichnet, dass** der zweite Bereich in Teilbereiche, vorzugsweise parallel zu der Regressionsgeraden, zerlegt wird, dass die Spektralwertdichte in den Teilbereichen berechnet wird und dass der Bildausschnitt für eine weitere Auswertung dann verwendet wird, wenn in dem ersten Bereich eine um ein vorgegebenes Verhältnis größere Spektralwertdichte als in den Teilbereichen ermittelt wird.

4. Verfahren nach Anspruch 1, **dadurch gekenn-**

**zeichnet, dass** der fouriertransformierte Bildausschnitt in einer ersten Hälfte zumindest teilweise in halbkreisförmige Kreisringsegmente und in einer zweiten Hälfte in keilförmige Segmente unterteilt wird, dass eine Spektralwertdichte jeweils für die halbkreisförmigen Kreisringsegmente und jeweils für die keilförmigen Segmente bestimmt wird und dass der Bildausschnitt für eine weitere Auswertung dann verwendet wird, wenn in einem Kreisringsegment zumindest eine um ein vorgegebenes Verhältnis größere Spektralwertdichte als in allen anderen Kreisringsegmenten ermittelt wird und wenn in einem keilförmigen Segment eine um ein vorgegebenes Verhältnis größere Spektralwertdichte als in allen anderen keilförmigen Segmenten ermittelt wird.

5. Verfahren nach einem der Ansprüche 3-4, **dadurch gekennzeichnet, dass** zwischen den einzelnen Teilbereichen oder Segmenten eine Interpolation durchgeführt wird.

6. Verfahren nach Anspruch 1, **dadurch gekennzeichnet, dass** Eigenwerte einer Trägheitstensormatrix der Spektralwerte ermittelt werden, dass ein Bildausschnitt für eine weitere Auswertung dann verwendet werden, wenn eine größere Kohärenz der Trägheitstensormatrix als ein vorgegebener Grenzwert ermittelt wird, und dass der Grenzwert vorzugsweise nahe an eins festgelegt wird.

7. Verfahren nach einem der vorhergehenden Ansprüche, **dadurch gekennzeichnet, dass** die Bildausschnitte quadratisch gewählt werden.

8. Verfahren nach einem der vorhergehenden Ansprüche, **dadurch gekennzeichnet, dass** die Bildausschnitte zwei bis fünf Papillarlinien umfassend gewählt werden.

9. Verfahren nach einem der vorhergehenden Ansprüche, **dadurch gekennzeichnet, dass** eine Spektralwertdichte für die fouriertransformierten Bildausschnitte ermittelt wird und dass ein Bildausschnitt für eine weitere Auswertung nur dann verwendet wird, wenn von der Spektralwertdichte ein vorgegebener Wert überschritten wird.

10. Verfahren nach einem der vorhergehenden Ansprüche, **dadurch gekennzeichnet, dass** eine Spektralwertdichte für einen kreisförmigen Ausschnitt aus dem fouriertransformierten Bildausschnitt vorzugsweise um den Ursprung des Frequenzraums bestimmt wird und dass der Bildausschnitt für eine weitere Auswertung nur dann verwendet wird, wenn von der Spektralwertdichte in dem kreisförmigen Ausschnitt ein vorgegebener Wert überschritten wird.

**11.** Verfahren nach einem der vorhergehenden Ansprüche, **dadurch gekennzeichnet, dass** die Bildausschnitte vor der Fouriertransformation digital gefiltert werden, vorzugsweise zur Kontrastverstärkung.

**12.** Verfahren nach einem der vorhergehenden Ansprüche, **dadurch gekennzeichnet, dass** die fouriertransformierten Bildausschnitte über einen Bandpass gefiltert werden.

**13.** Verfahren nach einem der vorhergehenden Ansprüche, **dadurch gekennzeichnet, dass** die Bildausschnitte jeweils in gleich große Bildpunkte unterteilt werden.

**14.** Verfahren nach Anspruch 13, **dadurch gekennzeichnet, dass** zu jedem Bildpunkt ein Helligkeits- und/oder Farbwert gespeichert wird.

**15.** Verfahren zur Fingerabdruckerkennung, **dadurch gekennzeichnet, dass** auswertbare Bildausschnitte eines Fingerabdrucks nach dem Verfahren nach einem der vorhergehenden Ansprüche ermittelt werden, dass auswertbare Bildausschnitte mit gespeicherten Fingerabdruckdaten verglichen werden und dass eine Identifikation des Fingerabdrucks ausgegeben wird, wenn eine Übereinstimmung der auswertbaren Bildausschnitte mit gespeicherten Fingerabdruckdaten festgestellt wird.

**16.** Verfahren zur Fingerabdruckerfassung, wobei auswertbare Bildausschnitte aus einem Fingerabdruck nach dem Verfahren nach einem der vorhergehenden Ansprüche ermittelt werden und wobei Fingerabdruckdaten dann gespeichert werden, wenn der erfasste Fingerabdruck für eine spätere Identifikation geeignet ist.

**17.** Vorrichtung zur Durchführung eines Verfahrens zur Fingerabdruckauswertung, wobei ein Bild eines Fingerabdrucks erfasst wird, wobei das Bild des Fingerabdrucks in Bildausschnitte unterteilt wird, wobei die Bildausschnitte fouriertransformiert werden, mit Mitteln zur Unterteilung eines fouriertransformierten Bildausschnitts in mindestens zwei Bereiche mit Mitteln zu Berecknung einer Spektralwertdichte aus den Spektralwerten für Bereiche des fouriertransformierten Bildausschnitts, mit Mitteln zum Vergleich der in einem ersten Bereich ermittelten Spektralwertdichte mit der in einem zweiten Bereich ermittelten Spektralwertdichte und mit Mitteln zur Verwendung des zugehörigen Bildausschnitts für eine weitere Auswertung, wenn in dem ersten Bereich eine um ein vorgegebenes Verhältnis größere Spektralwertdichte als in dem zweiten Bereich ermittelt wird.

**Claims**

**1.** Method for fingerprint evaluation, an image of a fingerprint being detected, the image of the fingerprint being subdivided into image sections and the image sections being Fourier transformed, **characterized in that** a Fourier transformed image section is subdivided into at least two areas, **in that** a spectral value density is calculated from the spectral values for areas of the Fourier transformed image section, **in that** the spectral value density determined in a first area is compared with the spectral value density determined in a second area, and **in that** the associated image section is used for a further evaluation whenever a spectral value density greater by a predetermined ratio in the first area than in the second area is determined.

**2.** Method according to Claim 1, **characterized in that** maxima of the spectral values are determined, **in that** a regression straight line determined by the maxima is calculated, **in that** a prescribable area around the regression straight line is defined as a first area, and **in that** an area outside the first area is defined around the regression straight line as a second area.

**3.** Method according to one of Claims 1-2, **characterized in that** the second area is broken down into subareas, preferably parallel to the regression straight line, **in that** the spectral value density in the subareas is calculated, and **in that** the image section is used for a further evaluation whenever a spectral value density greater by a predetermined ratio in the first area than in the second area is determined.

**4.** Method according to Claim 1, **characterized in that** the Fourier transformed image section is subdivided at least partially into semicircular annular segments in a first half and into wedge-shaped segments in a second half, **in that** a spectral value density is determined in each case for the semicircular annular segments and in each case for the wedge-shaped segments, and **in that** the image section is used for a further evaluation whenever at least one spectral value density greater by a predetermined ratio in one annular segment than in all other annular segments is determined, and whenever a spectral value density greater by a predetermined ratio in one wedge-shaped segment than in all other wedge-shaped segments is determined.

**5.** Method according to one of Claims 3-4, **characterized in that** an interpolation is carried out between the individual subareas or segments.

**6.** Method according to Claim 1, **characterized in that** eigenvalues of an inertia sensor matrix of the spectral values are determined, **in that** an image section is used for a further evaluation whenever a coherence of the inertia sensor matrix greater than a predetermined limit value is determined, and **in that** the limit value is preferably set close to 1.

7. Method according to one of the preceding claims, **characterized in that** the image sections are selected to be square.

8. Method according to one of the preceding claims, **characterized in that** the image sections are selected to comprise two to five papillary lines.

9. Method according to one of the preceding claims, **characterized in that** a spectral value density for the Fourier transformed image sections is determined, and **in that** an image section is used for a further evaluation only whenever a predetermined value is exceeded by the spectral value density.

10. Method according to one of the preceding claims, **characterized in that** a spectral value density for a circular section of the Fourier transformed image section is determined, preferably about the origin of the frequency domain, and **in that** the image section is used for a further evaluation only whenever a predetermined value is exceeded by the spectral value density in the circular section.

11. Method according to one of the preceding claims, **characterized in that** the image sections are digitally filtered, preferably for the purpose of contrast enhancement, before the Fourier transformation.

12. Method according to one of the preceding claims, **characterized in that** the Fourier transformed image sections are filtered by a bandpass filter.

13. Method according to one of the preceding claims, **characterized in that** the image sections are subdivided in each case into pixels of equal size.

14. Method according to Claim 13, **characterized in that** a brightness value and/or colour value are/is stored for each pixel.

15. Method for fingerprint evaluation, **characterized in that** evaluable image sections of a fingerprint are determined using the method according to one of the preceding claims, **in that** evaluable image sections are compared with stored fingerprint data, and **in that** an identification of the fingerprint is issued when it is established that the evaluable image sections correspond to stored fingerprint data.

16. Method for fingerprint detection, in which evaluable image sections from a fingerprint are determined using the method according to one of the preceding claims, and in which fingerprint data are stored whenever the detected fingerprint is suitable for later identification.

17. Device for carrying out a method for fingerprint evaluation, an image of a fingerprint being detected, the image of the fingerprint being subdivided into image sections, and the image sections being Fourier transformed, having means for subdividing a Fourier transformed image section in at least two areas, having means for calculating a spectral value density from the spectral values for areas of Fourier transformed image section, having means for comparing the spectral value density determined in a first area with the spectral value density determined in a second area, and having means for using the associated image section for a further evaluation when a spectral value density greater by a predetermined ratio in the first area than in the second area is determined.

## Revendications

1. Procédé d'interprétation d'empreintes digitales, selon lequel une image de l'empreinte est prise puis divisée en fractions d'image qui sont soumises à une transformation de Fourier,
   **caractérisé en ce qu'**
   une fraction d'image, après transformation de Fourier, est divisée en au moins deux zones et, à partir des valeurs spectrales de ces zones, une densité de valeur spectrale est calculée pour chacune d'elles, et la densité calculée pour la première zone est comparée à celle calculée pour la seconde zone, la fraction d'image correspondante étant alors utilisée pour une interprétation ultérieure si, dans la première zone est établie une densité de valeur dépassant au-delà d'un rapport prédéfini la densité établie pour la seconde zone.

2. Procédé selon la revendication 1,
   **caractérisé en ce que**
   des maxima des valeurs spectrales sont définis, une droite de régression définie par les maxima est calculée, une zone prédéfinissable est déterminée en tant que première zone autour de la droite de régression et une zone située en dehors de la première zone est déterminée en tant que seconde zone autour de la droite de régression.

3. Procédé selon la revendication 1 ou 2,
   **caractérisé en ce que**
   la seconde zone est divisée en zones partielles, de préférence parallèles à la droite de régression, et dans ces zones partielles la densité de valeur spectrale est calculée, et la fraction d'image est utilisée pour une autre interprétation si, dans la première zone est établie une densité de valeur spectrale qui dépasse, au-delà d'un rapport prédéfini, la densité dans les zones partielles.

4. Procédé selon la revendication 1,
   **caractérisé en ce que**

   - la fraction d'image, après transformation de Fourier, est dans une première moitié divisée au moins partiellement en segments annulaires demi-circulaires et dans une seconde moitié en segments en forme de coins,
   - une densité de valeur spectrale est définie, pour les segments annulaires demi-circulaires et pour les segments en forme de coin,
   - la fraction d'image est utilisée pour une interprétation ultérieure si, dans un segment annulaire est établie au moins une densité de valeur spectrale qui dépasse, au-delà d'un rapport prédéfini, les densités dans tous les autres segments annulaires, et si dans un segment en forme de coin est établie une densité de valeur spectrale qui dépasse, au-delà d'un rapport prédéfini, les densités dans tous les autres segments en forme de coin.

5. Procédé selon la revendication 3 ou 4,
   **caractérisé en ce que**
   une interpolation est effectuée entre les zones partielles ou segments individuels.

6. Procédé selon la revendication 1,
   **caractérisé en ce que**
   des valeurs propres d'une matrice des inerties des valeurs spectrales sont établies, et une fraction d'image est utilisée pour une interprétation ultérieure, s'il est établi une cohérence de la matrice des inerties qui dépasse une valeur limite prédéfinie qui est de préférence fixée proche de l'unité.

7. Procédé selon une des revendications précédentes,
   **caractérisé en ce que**
   les fractions d'image sont choisies de forme carrée.

8. Procédé selon une des revendications précédentes,
   **caractérisé en ce que**
   les fractions d'image sont choisies comportant de deux à cinq lignes papillaires.

9. Procédé selon une des revendications précédentes,
   **caractérisé en ce qu'**
   une densité de valeur spectrale est établie pour les fractions d'image après transformation de Fourier, et une fraction d'image est utilisée pour une interprétation ultérieure, seulement si la densité de valeur spectrale dépasse une valeur prédéfinie.

10. Procédé selon une des revendications précédentes,
    **caractérisé en ce qu'**
    une densité de valeur spectrale pour une partie en forme de cercle provenant d'une fraction d'image ayant subi la transformation de Fourier, est définie de préférence au niveau de l'origine de l'espace de fréquence et la fraction d'image est utilisée pour une évaluation ultérieure seulement si la densité de valeur spectrale, dans la partie en forme de cercle, dépasse une valeur prédéfinie.

11. Procédé selon une des revendications précédentes,
    **caractérisé en ce que**
    les fractions d'image, avant la transformation de Fourier, sont filtrées numériquement, de préférence pour améliorer le contraste.

12. Procédé selon une des revendications précédentes,
    **caractérisé en ce que**
    les fractions d'image, après la transformation de Fourier, sont filtrées par un filtre passe-bande.

13. Procédé selon une des revendications précédentes,
    **caractérisé en ce que**
    chaque fraction d'image est divisée en points d'image de même grandeur.

14. Procédé selon la revendication 13,
    **caractérisé en ce que**
    pour chaque point d'image, une valeur de luminosité et/ou de couleur est mémorisée.

15. Procédé d'interprétation d'empreintes digitales,
    **caractérisé en ce que**
    des fractions d'image d'une empreinte digitale exploitables selon le procédé sont établies selon une des revendications précédentes, ces fractions sont comparées à des données d'empreinte mémorisées et l'empreinte est identifiée quand est établie une correspondance entre les fractions d'image à exploiter et les données d'empreinte digitale mémorisées.

16. Procédé d'interprétation d'empreintes digitales,
    **caractérisé en ce que**
    des fractions d'image d'une empreinte digitale exploitables selon le procédé sont établies selon une des revendications précédentes, et des données d'empreinte sont alors mémorisées si l'empreinte digitale saisie convient pour une identification ultérieure.

**17.** Dispositif de mise en oeuvre d'un procédé d'interprétation d'empreintes digitales, dans lequel une image de l'empreinte est prise puis divisée en fractions d'image qui sont soumises à une transformation de Fourier, dispositif comportant des moyens pour diviser une fraction d'image, après transformation de Fourier, en au moins deux zones, des moyens pour calculer à partir des valeurs spectrales de ces zones, une densité de valeur spectrale pour chacune d'elles, des moyens pour comparer la densité calculée pour la première zone à celle calculée pour la seconde zone, et des moyens pour utiliser la fraction d'image correspondante pour une interprétation ultérieure si, dans la première zone est établie une densité de valeur dépassant au-delà d'un rapport prédéfini la densité établie pour la seconde zone.

Fig. 1a

Fig. 1b

Fig. 1c

Fig. 2

Fig. 3 a

Fig. 3 b

Fig. 4 a

Fig. 4 b

Fig. 5a

Fig. 5b

Fig. 6a

Fig. 6b

Fig. 7 a

Fig. 7 b

Fig. 8 a

Fig. 8 b

Fig. 9

Fig. 10

Fig. 11